(19) Europäisches Patentamt
European Patent Office
Office européen des brevets

(11) Veröffentlichungsnummer: **0 071 125**
**A1**

(12) **EUROPÄISCHE PATENTANMELDUNG**

(21) Anmeldenummer: 82106442.5

(22) Anmeldetag: 17.07.82

(51) Int. Cl.$^3$: C 08 G 63/62
C 08 G 63/68, C 08 K 5/42
C 08 L 69/00

(30) Priorität: 30.07.81 US 288704

(43) Veröffentlichungstag der Anmeldung:
09.02.83 Patentblatt 83/6

(84) Benannte Vertragsstaaten:
DE FR GB IT NL

(71) Anmelder: Mobay Chemical Corporation
Penn Lincoln Parkway West
Pittsburgh, Pennsylvania 15205(US)

(72) Erfinder: Sanderson, John R.
5306 Rambling Range
Austin Texas 78 759(US)

(74) Vertreter: Gremm, Joachim, Dr. et al,
Bayer AG c/o Zentralbereich Patente, Marken und Lizenzen
D-5090 Leverkusen 1, Bayerwerk(DE)

(54) **Nichthalogenierte flammwidrige Polycarbonate.**

(57) Gegenstand der vorliegenden Erfindung sind neue Polycarbonate mit einkondensierten Bis-sulfonylamidstruktureinheiten, ihre Herstellung und ihre Verwendung in flammwidrigen Polycarbonatformmassen.

EP 0 071 125 A1

## Nichthalogenierte flammwidrige Polycarbonate

Die vorliegende Erfindung betrifft Sulfonylamid-Polycarbonate.

Der Flammwidrigkeitsverbesserung von Polycarbonaten ohne Hilfe von Halogen und Salzadditiven stehen bis dato nur wenige Möglichkeiten zur Verfügung. (Siehe beispielsweise DE-OS 2 435 508 (Le A 15 813), DE-OS 2 732 556 (Le A 18 230) und DE-OS 3 002 550 (Le A 20 151)).

Gegenstand der vorliegenden Erfindung ist deshalb eine Alternative in Form eines Polycarbonats, in dessen Molekülketten Sulfonylamid-Gruppen enthaltende Einheiten eingebaut sind, die dem Polycarbonat einen höheren Flammwidrigkeitsgrad verleihen.

Gegenstand der vorliegenden Erfindung ist weiterhin ein Verfahren, mittels dessen Sulfonylamid-Gruppen in die Molekülstruktur von Polycarbonaten eingebaut werden.

Sulfonamidzusätze zu Polycarbonaten sind bis dato als Weichmacher (US-Patent 3 186 961 und GB-PS 2000 515) sowie als Entformungsmittel für Polycarbonate (DE-OS 2 506 726 (Le A 16 235) bekannt.

Die vorliegende Erfindung macht ein Polycarbonat mit verstärkter Flammwirdrigkeit verfügbar, das das Reaktionsprodukt aus mindestens einem aromatischen Diphenol, einer Sulfonylamid-Verbindung und einer Carbonat-Vorstufe umfaßt.

Die Polycarbonate gemäß der vorliegenden Erfindung sind thermoplastische Verbindungen mit einem Molekulargewicht von 10 000 bis 200 000, vorzugsweise von 20 000 bis 80 000 (Gewichtsmittel des Molekulargewichts), die beispielsweise mit Hilfe des Zweiphasen-Granzflächen-Polykondensationsverfahren hergestellt werden können (vgl. dazu die DE-OSen 2 063 050, 2 063 052, 1 570 703, 2 211 956, 2 211 957 und 2 248 817, die FR-PS 1 561 518 und die Monographie von H. Schnell, "Chemistry and Physics of Polycarbonates", Interscience Publishers, New York, 1964).

Die aromatischen Polycarbonate können auf jedem der nachstehenden Diphenole oder Mischungen aus diesen basieren: Hydrochinon, Resorcin, Dihydroxydiphenylen, Bis(hydroxyphenyl)alkane, Bis(hydroxyphenyl)cycloalkane, Bis(hydroxyphenyl)ketone, Bis(hydroxyphenyl)-sulfoxide, Bis(hydroxyphenyl)sulfone und $\alpha,\alpha'$-Bis(hydroxyphenyl)-diisopropylbenzole sowie entsprechende Verbindungen mit wechselnden Substituenten. Diese und andere geeignete Diphenole sind in den US-PSen 3 028 365, 2 999 835, 3 148 172, 2 991 273, 3 271 367 und 2 999 846 sowie den DE-OSen 1 570 703, 2 063 050 und 2 063 052 sowie der FR-PS 1 561 518 beschrieben.

Bevorzugte Diphenole entsprechen den Formeln (1) oder (2)

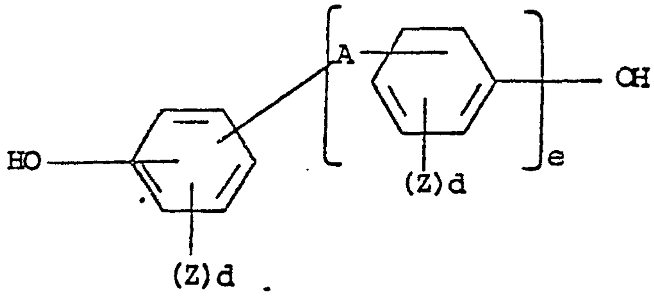

(1)

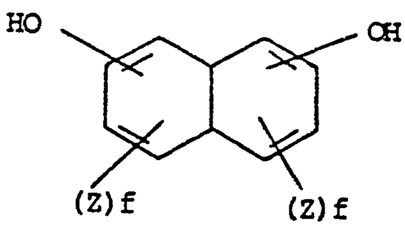

(2)

,

in denen

A eine Einfachbindung, eine Alkylen-Gruppe mit 2 bis 10 Kohlenstoff-Atomen, eine Alkyliden-Gruppe mit 1 bis 10 Kohlenstoff-Atomen, eine Cycloalkylen-Gruppe mit 5 bis 15 Kohlenstoff-Atomen, eine Cycloalkyliden-Gruppe mit 5 bis 15 Kohlenstoff-Atomen, eine Cycloalkylalkylen-Gruppe mit 7 bis 20 Kohlenstoff-Atomen, eine Cycloalkylalkyliden-Gruppe mit 6 bis 20 Kohlenstoff-Atomen, eine Sulfonyl-Gruppe, eine Sulfoxid-Gruppe, eine Carbonyl-Gruppe, Sauerstoff oder Schwefel,

e die Zahl 0 oder 1,

Z H, F, Cl, Br oder $C_1$- bis $C_{10}$-Alkyl, die im Falle mehrerer Z-Reste als Substituenten an einem Aryl-Rest gleich oder verschieden sein können,

d 0 oder eine ganze Zahl von 1 bis 4 und

f 0 oder eine ganze Zahl von 1 bis 3

bezeichnen.

Besonders bevorzugt unter den Verbindungen der Formel (1) sind diejenigen, in denen

e 1,

A eine Einfachbindung, die Isopropyliden-Gruppe, die $SO_2$-Gruppe oder Schwefel und

d 0 bezeichnen,

und vor allem 4,4'-Dihydroxydiphenyl, 2,2-Bis(4-hydroxyphenyl)propan (= Bisphenol A) und 4,4'-Dihydroxydiphenylsulfon.

Ebenfalls geeignet sind die Phenolphthalein-Verbindungen, die für die Herstellung von Polycarbonaten des Phenolphthalein-Typs verwendet werden, wie sie in den US-PSen 3 036 036 und 4 210 474 beschrieben sind.

In denen vor allen anderen bevorzugten Ausführungsformen sind Halogen-Substituenten der aromatischen Ringe der vorbezeichneten Diphenole ausgeschlossen.

Die für die praktische Ausführung der vorliegenden Erfindung geeigneten Sulfonylamid-Verbindungen sind solche der Formel (3)

$$\begin{array}{ccc} H & & H \\ | & & | \\ N & -O_2S-R'-SO_2- & N \\ | & & | \\ R & & R \end{array} \qquad (3),$$

in der R und R' unabhängig voneinander organische, vorzugsweise aromatische, Reste bezeichnen, wobei im einzelnen

R ein $C_1$- bis $C_{30}$-Alkyl, $C_4$- bis $C_{10}$-Cycloalkyl, $C_6$- bis $C_{14}$-Aryl oder ein substituiertes Aryl, vorzugsweise einen Phenyl-Rest, bezeichnen kann und

R' ein $C_1$- bis $C_{30}$-Alkylen, $C_6$- bis $C_{14}$-Arylen, $C_7$- bis $C_{30}$-Alkarylen, $C_7$- $C_{30}$-Aralkylen, vorzugsweise ein Biphenylen oder Oxidiphenylen, sein kann,

mit der Maßgabe, daß sie bei den üblicherweise bei der Verarbeitung von Polycarbonaten angewandten Temperaturen keine Zersetzung erleiden. In den bevorzugten Ausführungsformen bezeichnen R' ein Biphenylen oder ein Oxidiphenylen und R einen Phenyl-Rest.

Die Carbonat-Vorstufen können Phosgen, Carbonylbromid oder Bis-Chlorameinsensäureester einer aromatischen Dihydroxy-Verbindung sein.

Im Rahmen der vorliegenden Erfindung beträgt die Menge des Sulfonylamids, die eingearbeitet werden kann, zwischen 0,1 und 30 Mol-%, bevorzugt zwischen 0,5 und 20 Mol-% und insbesondere zwischen 1 und 10 Mol-% bezogen jeweils auf Molsumme an eingesetzten Diphenylen und Sulfonylamiden der Formel (3).

Gegenstand der vorliegenden Erfindung sind somit thermoplastische, aromatische Polycarbonate, die 0,1 bis 30 Mol-%, vorzugsweise 0,5 bis 20 Mol-% und insbesondere 1 bis 10 Mol-%, bezogen jeweils auf die Summe der Struktureinheiten (4) + (5), Struktureinheiten der Formel (4)

$$\left[-\underset{R}{\underset{|}{N}}-O_2S-R'-SO_2-\underset{R}{\underset{|}{N}}-\underset{O}{\underset{\|}{C}}-\right] \qquad (4),$$

worin R und R' die für die Sulfonylamide der Formel (3) genannte Bedeutung haben, und 99,9 bis 70 MOl-%, vorzugsweise 99,5 bis 80 Mol-% und insbesondere 99 bis 90 Mol-%, bezogen wieder jeweils auf die Summe der Struktureinheiten (4) + (5), Struktureinheiten der Formel (5)

$$\left[-O-Ar-O-\underset{O}{\underset{\|}{C}}-\right] \qquad (5),$$

worin -O-Ar-O- der Diphenolatrest der eingesetzten Diphenole mit vorzugsweise 6 bis 30 C-Atomen ist, enthalten.

Zur Erzielung spezieller Eigenschaften können Gemische von Diphenolen eingesetzt werden. Die bei weitem wertvollsten Polycarbonat-Harze sind diejenigen auf der Basis von 4,4'-Dihydroxydiarylmethanen und insbesondere von Bisphenol A [2,2-(4,4'-Dihydroxydiphenyl)propan].

Die Polycarbonate gemäß der vorliegenden Erfindung können durch den Einbau von dreifunktionellen oder mehr als dreifunktionellen Verbindungen in bekannter Weise verzweigt sein, wobei im allgemeinen 0,05 bis 2,0 Mol-% (bezogen auf Molsumme an eingesetzten Diphenolen und Sulfonylamiden) an Verzweigern eingesetzt werden. Verzweigte Polycarbonate werden beispielsweise in den DE-OSen 15 70 533, 15 95 762, 21 16 974 und 21 13 347, sowie dem US-Patent 4 185,009 beschrieben. Im folgenden sind einige Verzweiger aufgeführt, die zu diesem Zweck verwendet werden können:

Phloroglucin,
4,6-Dimethyl-2,4,6-tri-(4-hydroxyphenyl)hepten-2,
4,6-Dimethyl-2,4,6-tri-(4-hydroxyphenyl)heptan,
1,3,5-Tri-(4-hydroxyphenyl)benzol,
1,1,1-Tri-(4-hydroxyphenyl)ethan,
Tri-(4-hydroxyphenyl)phenylmethan,
2,2,-Bis[4,4-(4,4'-dihydroxydiphenyl)cyclohexyl]-propan,
2,4-Bis(4-hydroxyphenyl-4-isopropyl)phenol,

2,6-Bis(2'-hydroxy-5'-methylbenzyl)-4-methylphenol,
2,4-Dihydroxybenzoesäure,
2-(4-Hydroxyphenyl)-2-(2,4-dihydroxyphenyl)propan,
1,4-Bis (4',4"-dihydroxytriphenylmethyl)benzol und
3,3-Bis(4-hydroxyphenyl)oxindol.

Das bevorzugte Verfahren zur Herstellung der erfindungsgemäßen Polycarbonate ist das Grenzflächenpolykondensationsverfahren.

Nach dem Grenzflächenpolykondensationsverfahren werden Polycarbonat-Harze durch Reaktion der aromatischen Dihydroxy-Verbindungen mit einem Alkylimetallhydroxid oder einem Erdalkalimetalloxid oder -hydroxid erhalten, wobei die Salze der Hydroxy-Verbindungen gebildet werden. Die in Form einer wäßrigen Lösung oder Suspension vorliegende Salzmischung wird mit Phosgen, Carbonylbromid oder Bis-Chlorameisensäureestern der aromatischen Dihydroxy-Verbindungen umgesetzt, und die Sulfonylamid-Verbindung sowie ein Katalysator danach hinzugefügt. Der Reaktionsmischung ist ein organisches Lösungsmittel zugesetzt, das ein Lösungsmittel für die Polycarbonate, jedoch nicht für die aromatischen Dihydroxy-Salze ist. So werden chlorierte aliphatische Kohlenwasserstoffe oder chlorierte aromatische Kohlenwasserstoffe als das organische Lösungsmittel verwendet, das das Kondensationsprodukt löst. Zur Begrenzung des Molekulargewichts kann man monofunktionelle Reaktionsteilnehmer Monophenole, beispielsweise die Propyl-, Isopropyl- und Butylphenole, insbesondere p-tert-Butylphenol und Phenol selbst, verwenden. Zur Beschleunigung der

Reaktion können Katalysatoren wie tertiäre Amine, quaternäre Ammonium-, Phosphonium- oder Arsoniumsalze und dergleichen verwendet werden. Die Reaktionstemperatur sollte etwa -20°C bis +150°C, vorzugsweise 0°C bis etwa 100°C, betragen.

Ein weiterer Gegenstand der vorliegenden Erfindung ist somit auch ein Verfahren zur Herstellung der erfindungsgemäßen Polycarbonate, das dadurch gekennzeichnet ist, daß man nach dem bekannten Pasengrenzflächenverfahren 99.9 bis 70 Mol-%, vorzugsweise 99,5 bis 80 Mol-% und insbesondere 99 bis 90 Mol-%, bezogen jeweils auf die Molsumme der Verbindungen (6) + (3), Diphenole der Formel (6)

$$HO-Ar-OH \qquad (6)$$

worin -Ar- der zweibindige aromatische Rest der eingesetzten Diphenole mit vorzugsweise 6 bis 30 C-Atomen ist, Phosgen, Kettenabbrecher und gegebenenfalls Verzweiger mit 0,1 bis 30 Mol-%, vorzugsweise 0,5 bis 20 Mol-%, und insbesondere 1 bis 10 Mol-%, bezogen wieder jeweils auf die Molsumme der Verbindungen (6) + (3), Sulfonylamid-Verbindungen der Formel (3)

$$\overset{H}{\underset{R}{N}} - O_2S - R' - SO_2 - \overset{H}{\underset{R}{N}} \qquad (3)$$

worin R und R' die eingangs bereits genannte Bedeutung haben, umsetzt, wobei die Sulfonylamide (3) zusammen

mit den Polykondensationkatalysatoren nach der Phosgenierung dem Reaktionsgemisch zugesetzt werden.

Ein weiteres Verfahren zur Herstellung der erfindungsgemäßen Polycarbonate ist beispielsweise das bekannte Polykondensationsverfahren in homogener Phase; danach werden die gelösten Reaktionsbestandteile in einem inerten Lösungsmittel in Gegenwart einer äquivalenten Menge einer tertiären Amin-Base polykondensiert, die zur Aufnahme der erzeugten HCl benötigt wird, wie z.B. N,N-Dimethylanilin, N,N-Dimethyl-cyclohexylamin oder, vorzugsweise Pyridin und dergleichen.

Ein weiterer Gegenstand der vorliegenden Erfindung ist somit auch ein Verfahren zur Herstellung der erfindungsgemäßen Polycarbonate, das dadurch gekennzeichnet ist, daß man nach dem bekannten Polykondensationsverfahren in homogener Phase 99,9 bis 70 Mol-%, vorzugsweise 99,5 bis 80 Mol-% und insbesondere 99 bis 90 Mol-%, bezogen jeweils auf die Molsumme der Verbindungen (6) + (3), Diphenole der Formel (6)

$$HO - Ar - OH \qquad (6)$$

worin -Ar- die bereits genannte Bedeutung hat, Phosgen, Kettenabbrecher und gegebenenfalls Verzweiger, mit 0,1 bis 30 Mol-%, vorzugsweise 0,5 bis 20 Mol-% und insbesondere 1 bis 10 Mol-%, bezogen wieder jeweils auf die Molsumme der Verbindungen (6) + (3), Sulfonylamid-Verbindungen der Formel (3)

$$\begin{matrix} H \\ | \\ N \\ | \\ R \end{matrix} - O_2S - R' - SO_2 - \begin{matrix} H \\ | \\ N \\ | \\ R \end{matrix} \qquad (3)$$

worin R und R' die eingangs bereits genannte Bedeutung haben, in einem inerten Lösungsmittel in Gegenwart einer äquivalenten Menge einer tertiären Amin-Base polykondensiert.

Es ist darauf hinzuweisen, daß es möglich ist, in den vorher beschriebenen Verfahren in chemisch sinnvoller Weise sowohl die aromatischen Dihydroxy-Verbindungen als auch die Monohydroxy-Verbindungen in Form der Alkalimetall-Salze und/oder Bis-Chlorameisensäureester und die dann noch zur Gewinnung eines hochmolekularen Produkts erforderliche Menge Phosgen oder Carbonylbromid zu kombinieren. Auch andere Verfahren für die Bildung der erfindungsgemäßen Polycarbonate, wie sie etwa in der US-PS 3 912 688 offenbart sind, können verwendet werden.

Die erfindungsgemäßen Polycarbonat-Harze können weiterhin dadurch verbessert oder verändert werden, daß ihnen nach dem Stand der Technik bekannte Zusatzstoffe, Füllstoffe oder Verstärkungsmittel zugemischt werden.

Von den Zusatzstoffen können Perfluoralkansulfonsäure-Salze der Alkalimetalle, entsprechend der Lehre der US-PS 3 775 367, in einer Menge von 0,01 bis 1 Gew.-%, bezogen auf das Gewicht des Harzes, zum Zweck einer weiteren Verbesserung der Flammwidrigskeitsbewertung zugesetzt werden.

Gegenstand der vorliegenden Erfindung sind somit auch Polycarbonatformmassen, die dadurch gekennzeichnet sind,

daß sie die erfindungsgemäßen Polycarbonate und 0,01 bis 1 Gew.-%, bezogen auf Gesamtgewicht aus Polycarbonat und Salz, eines Alkaliperfluoralkansulfonats enthalten.

Die erfindungsgemäßen Polycarbonate können zu beliebigen Formkörpern, gegebenenfalls unter Mitverwendung der für Polycarbonate üblichen Zusatzstoffe, nach bekannten Methoden verarbeitet werden. Sie sind überall dort einsetzbar, wo Polycarbonate bislang Einsatz fanden darüberhinaus aber eine verbesserte Flammwidrigkeit gewünscht oder gar gefordert ist.

Herstellung eines Sulfonylamids der Formel (3)

Die Herstellung des 4,4'-Bis(phenylaminosulfo)diphenylethers kann folgendermaßen durchgeführt werden:
734 g (2 Mol) 4,4'-Bis(chlorsulfo)biphenylether wurden in 2 l $CH_2Cl_2$ gelöst und filtriert, um die Mutterlauge von den unlöslichen Verunreinigungen zu befreien, und die Flüssigkeit wurde dann in einen Dreihalskolben gegeben. 810 ml (8,7 Mol) Anilin wurden dann langsam hinzugefügt, wobei die Temperatur auf etwa 25°C bis 30°C gehalten wurde. Der erhaltene Schlamm wurde dann filtriert zweimal mit $CH_2Cl_2$ gewaschen und gegetrocknet. Das Material wurde dann in einer Lösung aus Methanol plus Wasser gelöst und umkristallisiert. 400 g des rohen 4,4'-Bis(phenylaminosulfo)diphenyethers (PSAE) wurden in 1 l Methanol zum Sieden erhitzt und sodann wurde Wasser (etwa 10 Vol.-%) langsam zugesetzt, bis die Lösung sich trübte; die Mischung wurde dann auf 25°C abgekühlt und filtriert. Der Rückstand wurde dann mit Wasser gewaschen und zunächst an der Luft und danach

6 h im Vakuum bei 70°C getrocknet, nochmals mit einer 50-proz. Lösung von Methanol in Wasser gewaschen und erneut in einem Vakuumofen getrocknet. Der Schmelzpunkt wurde zu etwa 152°C bis 154°C bestimmt, und die Ausbeute nach dem Umkristallisieren wurde zu etwa 95 % gefunden.

Die chemische Elementaranalyse der Verbindung ergab nachstehende Werte:

| | |
|---|---|
| C | 59,99 % |
| H | 4,20 % |
| N | 5,81 % |
| S | 12,99 %. |

Das Material wurde mit Bisphenol A und Phosgen entsprechend der im Vorstehenden beschriebenen Grenzflächen-Polykondenssationsreaktion umgesetzt.

## Beispiele

### Beispiel 1

Ein Polycarbonat aus Bisphenol A und PSAE (4,4'-Bis-(phenylaminosulfo)diphenylether) wurde durch Phosgenierung einer 2,5 Gew.-% PSAE und 97,5 Gew.-% Bisphenol A enthaltenden Mischung hergestellt. Eine wäßrige Lösung von Bisphenol A wurde dadurch hergestellt, daß in ein geeignetes Mischgefäß gleichzeitig 9,1 kg Bisphenol A, 44,9 kg Wasser, 6,5 kg 50-proz. wäßriges Natriumhydroxid und 0,12 kg Phenol hineingegeben wurden. 33,7 kg/h dieser Lösung wurden mit 2,6 kg/h Phosgen in 43,1 kg/h eines Lösungsmittels aus Methylenchlorid: Chlorbenzol (1:1) kontinuierlich phosgeniert. 2,4 kg/h einer 25-proz. wäßrigen Ätzalkali-Lösung wurden zur Aufrechterhaltung des richtigen pH für die Grenzflächenreaktion zugesetzt. Die phosgenierte Lösung wurde dann mit 8,7 kg/h einer 1,5-proz. PSAE-Lösung in Methylenchlorid vermischt, und anschließend wurden 1,3 kg/h 25-proz. wäßriges Natriumhydroxid und 0,025 kg/h Triethylamin zugegeben, um die Polykondensationsreaktion zu katalysieren. Die Zeit zur Vervollständigung der Reaktion betrug im Mittel 45 min. Die organische Phase wurde von der wäßrigen Phase abgetrennt, und die das hochmolekulare Polycarbonat enthaltende organische Phase wurde mit wäßriger Natriumhydroxid-Lösung, wäßriger Phosphorsäure-Lösung und Wasser gewaschen. Die Lösung des Polycarbonats wurde durch Abdampfen des Lösungsmittels eingeengt, und die konzentrierte Lösung wurde durch einen Entgasungsextruder geschickt, wodurch das

Polycarbonat isoliert wurde. Das auf diese Weise hergestellte Polycarbonat hatte eine relative Viskosität von 1,233 (0,37 % in Methylenchlorid). Die Polykondensationsreaktion wurde bei 25°C bis 30°C durchgeführt. Die nachstehend aufgeführten Eigenschaften kennzeichnen das Polycarbonat:

| | |
|---|---|
| Gelbwert | 4,2 |
| Sauerstoffindex | 28,5 |
| Ul-94 Entflammbarkeits-Test: | |
| Stäbe 1,59 mm (1/16"): | |
| Bewertung | V-2 |
| Mittlere Brennzeit | 4,1 s |
| Stäbe 3,18 mm (1/8"): | |
| Bewertung | V-2 |
| Mittlere Brennzeit | 3,2 s |
| Izod-Kerbschlagzähigkeit in J/25,4 mm (ft.lb/in) für | |
| Stäbe 3,18 mm (1/8"): | 16,72 (12,33) |
| Stäbe 6,35 mm (1/4"): | 2,30 ( 1,7 ) |
| Kritische Dicke: | 3,683 mm (145 mil) |
| Formbeständigkeit in der Wärme | |
| bei 18,2 bar (264 psi) | 130,3°C |
| bei 4,14 bar (60 psi) | 142,8°C |

Beispiel 2

Das Polycarbonat aus Beispiel 1 wurde mit etwa 0,1 Gew.-% Kaliumperfluorobutansulfonat gemischt. Die Eigenschaften der Zusammensetzung sind nachstehend angegeben:

| | |
|---|---|
| Gelbwert bei 343°C (650°F) | 4,6 |
| Schmelzindex | 16,0 |
| Sauerstoffindex | 36,0 |
| Ul-94 Entflammbarkeits-Test: | |
| Stäbe 1,59 mm (1/16"): | |
| Bewertung | V-2 |
| Mittlere Brennzeit | 1,7 s |
| Stäbe 3,18 mm (1/8"): | |
| Bewertung | V-2 |
| Mittlere Brennzeit | 0,8 s |
| Izod-Kerbschlagzähigkeit in J/25,4 mm (ft.lb/in) für | |
| Stäbe 3,18 mm (1/8"): | 17,35 (12,8) |
| Stäbe 6,35 mm (1/4"): | 1,90 ( 1,4) |
| Kritische Dicke: | 3,683 mm (145 mil) |
| Formbeständigkeit in der Wärme | |
| bei 18,2 bar (264 psi) | 128,7°C |
| bei 4,55 bar (66 psi) | 142,9°C |

## Patentansprüche

1. Thermoplastische aromatische Polycarbonate, dadurch gekennzeichnet, daß sie 0,1 bis 30 Mol-%, bezogen auf die Summe der Struktureinheiten (4) + (5), Struktureinheiten der Formel (4)

$$\left[ -\underset{R}{\underset{|}{N}}-O_2S-R'-SO_2-\underset{R}{\underset{|}{N}}-\underset{O}{\underset{\|}{C}}- \right] \qquad (4)$$

worin R ein $C_1$-$C_{30}$-Alkyl, $C_4$-$C_{10}$-Cycloalkyl, $C_6$-$C_{14}$-Aryl oder ein substituiertes Aryl ist, und

R' ein $C_1$-$C_{30}$-Alkylen, $C_6$-$C_{14}$-Arylen, $C_7$-$C_{30}$-Alkarylen, $C_7$-$C_{30}$-Aralkylen, Bisphenylen oder Oxidiphenylen ist, und

99,9 bis 70 Mol-%, bezogen auf die Summe der Struktureinheiten (4) + (5), Struktureinheiten der Formel (5)

$$\left[ -O-Ar-O-\underset{O}{\underset{\|}{C}}- \right] \qquad (5)$$

worin -O-Ar-O- der Diphenolatrest der eingesetzten Diphenole ist, enthalten.

2. Verfahren zur Herstellung der Polycarbonate des Anspruchs 1, dadurch gekennzeichnet, daß man nach dem bekannten Phasengrenzflächenverfahren 99,9

bis 70 Mol-%, bezogen auf die Molsumme der Verbindungen (6) + (3), Diphenole der Formel (6)

$$HO-Ar-OH \qquad (6)$$

worin -Ar- der zweiwertige aromatische Rest der eingesetzten Diphenole ist, Phosgen, Kettenabbrecher und gegebenenfalls Verzweiger mit 0,1 bis 30 Mol-%, bezogen auf die Molsumme der Verbindungen (6) + (3), Sulfonylamid-Verbindungen der Formel (3)

$$\underset{R}{\overset{H}{N}}-O_2S-R'-SO_2-\underset{R}{\overset{H}{N}} \qquad (3)$$

worin R und R' die in Anspruch 1 genannte Bedeutung haben, umsetzt, wobei die Sulfonylamide (3) zusammen mit dem Polykondensationskatalysatoren nach der Phosgenierung dem Reaktionsgemisch zugesetzt werden.

3. Verfahren zur Herstellung der Polycarbonate des Anspruchs 1, dadurch gekennzeichnet, daß nach dem bekannten Polykondensationsverfahren in homogener Phase 99,9 bis 70 Mol-%, bezogen auf die Molsumme der Verbindungen (6) + (3) Diphenole der Formel (6)

$$HO-Ar-OH \qquad (6)$$

worin -Ar- die in Anspruch 2 genannte Bedeutung hat, Phosgen, Kettenabbrecher und gegebenenfalls

Verzweiger mit 0,1 bis 30 Mol-%, bezogen wiederum auf die Molsumme der Verbindungen (6) + (3), Sulfonylamid-Verbindungen der Formel (3)

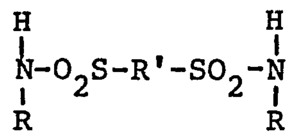

(3)

worin R und R' die in Anspruch 2 genannte Bedeutung haben, in einem inerten Lösungsmittel in Gegenwart einer äquivalenten Menge einer tertiären Amin-Base polykondensiert werden.

4. Polycarbonatformmassen, dadurch gekennzeichnet, daß sie Polycarbonate des Anspruchs 1 und 0,01 bis 1 Gew.-%, bezogen auf Gesamtgewicht aus Polycarbonat und Salz, eines Alkaliperfluoralkansulfonats enthalten.

0071125

Nummer der Anmeldung

Europäisches Patentamt

# EUROPÄISCHER RECHERCHENBERICHT

EP 82 10 6442.5

| EINSCHLÄGIGE DOKUMENTE | | | KLASSIFIKATION DER ANMELDUNG (Int Cl 3) |
|---|---|---|---|
| Kategorie | Kennzeichnung des Dokuments mit Angabe, soweit erforderlich, der maßgeblichen Teile | betrifft Anspruch | |
| A | US - A - 4 218 357 (V. MARK et al.)<br>* Anspruch 1 ; Beispiel 1 *<br>-- | 1,3 | C 08 G 63/62<br>C 08 G 63/68<br>C 08 K 5/42<br>C 08 L 69/00 |
| A | DE - A1 - 2 828 106 (GENERAL ELECTRIC CO.)<br>* Ansprüche 1 bis 3, 6 ; Beispiel * | 1,3 | |
| D,A | & GB - A - 2 000 515<br>-- | | RECHERCHIERTE SACHGEBIETE (Int Cl 3) |
| P,A | EP - A2 - 0 043 997 (MOBAY CHEMICAL CORP.)<br>* Anspruch 3 *<br>-- | 1 | C 08 G 63/62<br>C 08 G 63/68<br>C 08 K 5/00<br>C 08 K 5/02<br>C 08 K 5/42<br>C 08 L 69/00 |
| A | EP - A2 - 0 001 096 (MOBAY CHEMICAL CORP.)<br>* Seite 12, Zeilen 12 bis 34 *<br>---- | 4 | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 19-10-1982 | WIBMER |